# EUROPEAN PATENT SPECIFICATION

(11) **EP 4 560 750 B1**
(45) Date of publication and mention of the grant of the patent: **29.07.2026**
(21) Application number: 23860773.3
(22) Date of filing: 24.08.2023
(51) Int. Cl.: H01M 10/04, H01M 10/0585

(54) **ELECTRODE ASSEMBLY MANUFACTURING METHOD AND ELECTRODE ASSEMBLY**
ELEKTRODENANORDNUNGSHERSTELLUNGSVERFAHREN UND ELEKTRODENANORDNUNG
PROCÉDÉ DE FABRICATION D'ENSEMBLE ÉLECTRODE ET ENSEMBLE ÉLECTRODE

(30) Priority: 29.08.2022 KR 20220108707; 21.08.2023 KR 20230109253
(43) Date of publication of application: 28.05.2025
(73) Proprietor: LG Energy Solution, Ltd., Seoul 07335 (KR)
(72) Inventor: PARK, Sung Chul, Daejeon 34122 (KR); KANG, Tae Won, Daejeon 34122 (KR); PARK, Dong Hyeuk, Daejeon 34122 (KR)
(74) Representative: Plasseraud IP
(86) International application number: PCT/KR2023/012520
(87) International publication number: WO 2024/049096

(56) References cited:
- JP-A- 2000 215 886
- JP-A- 2011 258 501
- KR-A- 20110 069 713
- KR-B1- 101 807 354
- KR-B1- 102 259 747
- US-A1- 2011 151 307

## Description

### TECHNICAL FIELD

### TECHNICAL FIELD

The present invention relates to a method for manufacturing an electrode assembly for a secondary battery, and an electrode assembly manufactured thereby.

### BACKGROUND ART

In recent years, the price of energy sources increases due to the depletion of fossil fuels, the interest in environmental pollution is amplified, and the demand for ecofriendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for secondary batteries as energy sources are rapidly increasing. Thus, many studies on batteries which are capable of meeting various demands have been conducted.

The secondary batteries are classified into cylindrical batteries and prismatic batteries, in which an electrode assembly is embedded in a cylindrical or prismatic metal can, and pouch-type batteries, in which an electrode assembly is embedded in a pouch-type case made of an aluminum laminate sheet according to shapes of battery cases.

In addition, the electrode assembly may be classified into various types depending on their manufacturing methods. For example, the electrode assembly may be classified into a simple stack type in which a plurality of electrodes and separators are stacked alternately, a lamination & stack type in which unit cells, in which electrodes and separators are laminated are stacked, a jelly-roll type in which an electrode sheet and a separator sheet are wound together, a stack & folding type in which a separator sheet, in which unit cells are stacked, is folded, a z-folding type in which a separator sheet, in which a plurality of electrodes are stacked, is folded in a zigzag shape, and the like.

Particularly, the lamination & stack type electrode assembly has an advantage of being of high quality and being manufactured quickly. However, the lamination & stack type electrode assembly has no or weak adhesive force between the unit cells, and thus, there is a risk that alignment between the unit cells is misaligned.

In addition, there is a risk that the separator is folded due to external force or is shrunk due to heat to cause direct short-circuit between the positive electrode and the negative electrode.

US 2011/151307 A1 discloses a rechargeable battery.

### DISCLOSURE OF THE INVENTION

### TECHNICAL PROBLEM

An object of the present invention for solving the above problems is to provide an electrode assembly, which prevents short circuit between electrodes having opposite polarities from occurring due to bonding between separators, and a method for manufacturing the same.

An object of the present invention for solving the above problems is to provide an electrode assembly in which bonding between separators is easily performed and which has high energy density, and a method of manufacturing the same.

### TECHNICAL SOLUTION

A method for manufacturing an electrode assembly according to an embodiment of the present invention is laid out in appended claim 1.

### ADVANTAGEOUS EFFECTS

According to the preferred embodiment of the present invention, the first electrode and the second electrode may be prevented from being short-circuited by the bonding part provided by bonding the separators to each other.

In addition, the separator may protrude sufficiently longer than the negative electrode to easily form the bonding part, thereby preventing the bonding part from being ruptured or disconnected.

In addition, since the bonding part is folded, the full width of the electrode assembly may be prevented from unnecessarily increasing to increase in energy density of the electrode assembly.

In addition, since the inner end of the bonding part is disposed to be as close as possible to the cell stack by the roll, the increase in width of the electrode assembly by the separator may be minimized, and the energy density of the electrode assembly may be improved.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the present invention along with the detailed description of the invention, and thus, the present invention should not be construed as being limited to only the drawings.
FIG. 1 is a perspective view illustrating an electrode assembly according to an embodiment of the present invention.
FIG. 2 is a cross-sectional view illustrating the electrode assembly according to an embodiment of the present invention.
FIG. 3 is a cross-sectional view illustrating a state in which a bonding part of FIG. 2 is formed.
FIG. 4 is a flowchart illustrating a method for manufacturing an electrode assembly according to another embodiment of the present invention.
FIG. 5 is a schematic view illustrating an apparatus for manufacturing a unit cell.
FIGS. 6 and 7 are views illustrating an example of a stacked structure of a cell stack.
FIG. 8 is a schematic view illustrating an example of a method for manufacturing a bonding part.
FIG. 9 is a schematic view illustrating another example of a method for manufacturing a bonding part.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

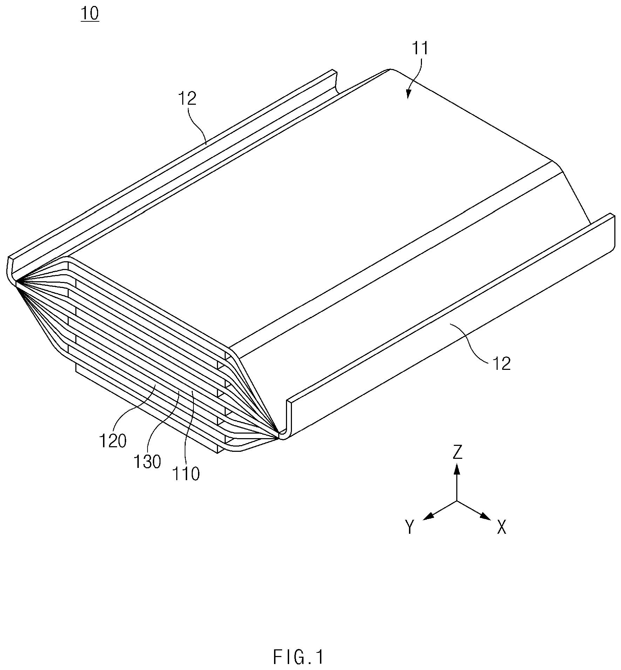

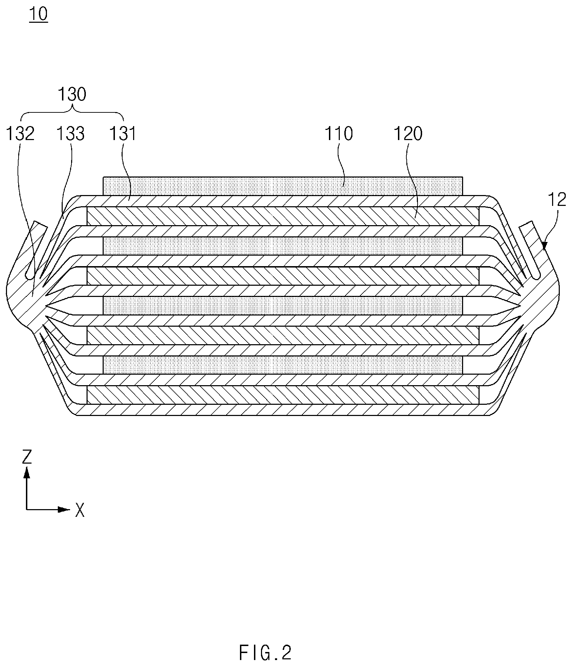

FIG. 1 is a perspective view illustrating an electrode assembly according to an embodiment of the present invention, and FIG. 2 is a cross-sectional view illustrating the electrode assembly according to an embodiment of the present invention.

An electrode assembly 10 according to an embodiment of the present invention may include a cell stack 11, in which electrodes 110 and 120 are stacked with a separator 130 therebetween, and a bonding part 12 in which a plurality of separators 130 protruding outward than the electrodes 110 and 120 are bonded to each other.

Each of the electrodes 110 and 120 may have a substantially square shape. Each of the electrodes 110 and 120 may have a pair of long sides extending in a full-length direction (e.g., direction parallel to an Y-axis in FIG. 1) of the cell stack 11 and a pair of short sides extending in a full-width direction (e.g., direction parallel to an X-axis in FIG. 1) of the cell stack 11.

The electrodes 110 and 120 may include a first electrode 110 and a second electrode 120. The second electrode 120 may have a width greater than that of the first electrode 110. The first electrode 110 and the second electrode 120 may be alternately stacked with the separator 130 therebetween. For example, the first electrode 110 may be a positive electrode, and the second electrode 120 may be a negative electrode.

The separators 130 may protrude outward than the electrodes 110 and 120 and may be bonded to each other to form a bonding part 12. The bonding part 12 may be formed by bonding edges of the separators 130 to each other. In more detail, the bonding part 12 may be formed by bonding both the edges of the separator 130 in a width direction to each other. Thus, the bonding part 12 may be disposed at both sides of the cell stack 11 in the width direction.

As a result, short circuit between the long sides of the electrodes 110 and 120 may be reliably prevented. In particular, as a full length of the electrode assembly 10 is longer than a full width (for example, a long cell), there is a risk that the edge in the width direction of the separator 130 is folded. Therefore, it may be effective to prevent the above concern if the bonding part 12 is disposed at each of both the sides in the width direction of the cell stack 11.

The bonding part 12 may be provided to be long in the full-length direction of the cell stack 11. However, it is not limited thereto, and the bonding part 12 may be provided in plurality at predetermined intervals in the full-length direction of the cell stack 11.

The bonding part 12 may be folded toward the cell stack 11. In more detail, the bonding part 12 may be folded toward the cell stack 11 at least once. For example, the bonding part 12 may be folded once as illustrated in FIG. 2. As another example, the bonding part 12 may be double side folded (DSF).

As a result, the full width of the electrode assembly 10 may be prevented from unnecessarily increasing, and thus, the energy density may more increase. In addition, when the electrode assembly 10 is accommodated in a pouch-type battery case (not shown), an interference of the bonding part 12 with the battery case may be minimized. In addition, when compared to a case in which the bonding part 12 is provided to be short so as not to be folded, bonding force between the plurality of separators that forms the bonding part 12 may be strengthened.

The folded bonding part 12 may not protrude outward than the cell stack 11 with respect to the stacking direction of the cell stack 11. In more detail, the entire folded bonding part 12 may overlap the cell stack 11 in the full-width direction of the cell stack 11. For example, when the bonding part 12 is folded once as illustrated in FIG. 2, an end of the bonding part 12 may not protrude outward than the uppermost or lowermost end of the cell stack 11.

As a result, the height of the electrode assembly 10 may be prevented from unnecessarily increasing, and thus, the energy density may more increase. In addition, when the electrode assembly 10 is accommodated in a pouch-type battery case (not shown), an interference of the bonding part 12 with the battery case may be minimized.

Each of the separators 130 may include a first area 131 overlapping the first electrode 110 or the second electrode 120 in the stacking direction of the cell stack 11, a second area 132 that forms the bonding part 12, and a third area 133 connecting the first area 131 to the second area 132. The first area 131 may be parallel to the electrodes 120 and 130. The third areas 133 of the plurality of separators 130 may be disposed to be inclined in a direction that approaches each other toward the outside.

All the separators 130 of the cell stack 11 may be bonded at once to form the bonding part 12. The proximal end of the bonding part 12 according to the invention is disposed to correspond to a central portion in the stacking direction of the cell stack 11 (for example, direction parallel to a Z-axis in FIG. 1). Thus, an inclination of the third area 133 may be steeper at the separator 130 disposed at each of both outer sides. The longer the separator 130 is disposed on both outer sides, the longer the third area 133 may be formed to be long.

If the proximal end of the bonding part 12 is disposed eccentrically downward with respect to the stacking direction of the cell stack 11, there is a problem in that the third area 133 of the uppermost separator 130 has to be very long. That is, the proximal end of the bonding part 12 according to the invention is disposed to correspond to the central portion of the cell stack 11, and thus, a length of the outermost separator 130 required to form the bonding part 12 may be reduced. The outermost separator 130 may be a separator 130 disposed at the outermost side of the cell stack 11 or a separator 130 in which the electrodes 110 and 120 disposed R the outermost side of the cell stack 11 are stacked.

Since a length of the third area 133 is provided to be long as the separator 130 is disposed at each of both the outer sides, the length of the outermost separator 130 may have to be sufficiently long to easily form the bonding part 12. In addition, as the height of the cell stack 11 increases, the length of the outermost separator 130 required to form the bonding part 12 has to also increase.

Thus, the length of the outermost separator 130 of the plurality of separators 130 of the electrode assembly 10 protruding outward than the second electrode 120 may be 0.7 times or more than the height h of the cell stack 11. As a result, the bonding part 12 may be easily formed, and the third area 133 of the outermost separator 130 may be prevented from being ruptured or disconnected after the bonding part 12 is formed.

In more detail, when viewed in the full-width direction of the cell stack 11 as illustrated in FIG. 2, the length at which the outermost separator 130 protrudes outward than the second electrode 120 is 1.25 times or more the height h of the cell stack 11.

The length at which each separator 130 protrudes outward than the second electrode 120 may mean the sum of the length of the bonding part 12 and the length of the third area 133 of each separator 130.

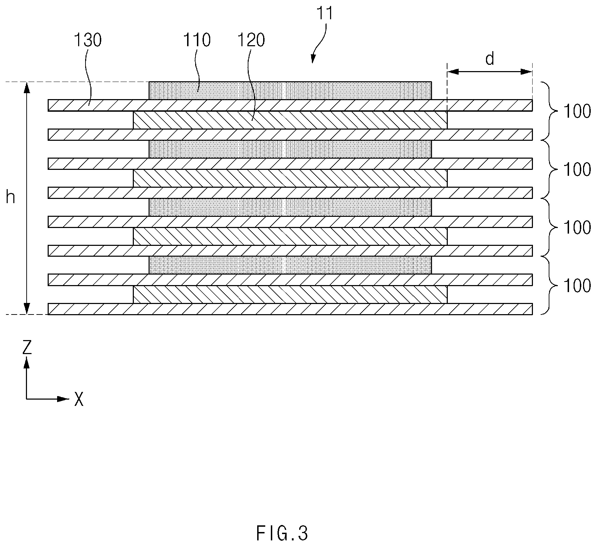

FIG. 3 is a cross-sectional view illustrating a state in which the bonding part of FIG. 2 is formed.

Before forming the bonding part 12, that the outermost separator 130 of the cell stack 11 is formed to have a length that is different from that of the other separators 130 may be inefficient in terms of manufacturing. Thus, as illustrated in FIG. 3, before forming the bonding part 12, the plurality of separators 130 provided in the cell stack 11 may have the same width or similar widths.

Before forming the bonding part 12, the length d of the separator 130 protruding outward than the cell stack 11 beyond the second electrode 120 is 1.25 times or more the height h of the cell stack 11. As a result, the bonding part 12 may be easily formed.

In addition, before forming the bonding part 12, the length d of the separator 130 protruding outward than the cell stack 11 beyond the second electrode 120 may be 2.4 times or less the height h of the cell stack 11, preferably 1.88 times or less. As a result, the separator 130 may be prevented from being formed to be long unnecessarily, and manufacturing costs of the cell stack 11 may be reduced.

That is, before forming the bonding part 12, the length d of the separator 130 protruding outward than the cell stack 11 beyond the second electrode 120 is 1.25 times to 1.88 times the height h of the cell stack 11.

For example, the height h of the cell stack 11 may be approximately 8 mm, and the length of each separator 130 protruding outward than the second electrode 120 may be 10 mm to 15 mm.

The cell stack 11 may be formed by stacking a plurality of unit cells 100. That is, the cell stack 11 may be a lamination and stack (L&S) type. In each unit cell 100, the sum of the number of first electrodes 110 and second electrodes 120 may be equal to the number of separators 130. For example, as illustrated in FIG. 3, each unit cell may include one first electrode 110, one second electrode 120, and two separators 130.

The electrodes 110 and 120 and the separator 130, which are provided in each unit cell 100, may be in a laminated state.

Adhesion force between the adjacent unit cells 100 may be weaker than that between the electrodes 110 and 120 and the separator 130 within each unit cell 100. In more detail, the adhesive force between each of the electrodes 110 and 120 of one unit cell 100 and the separator 130 of the other unit cell 100 may be weaker than that between each of the electrodes 110 and 120 and the separator 130 within one unit cell 100. Based on these characteristics, it may be determined that the cell stack 11 is the lamination and stack (L&S) type rather than the simple stacked type.

Therefore, in each unit cell 100, the length d of the separator 130 protruding outward than the second electrode 120 is 1.25 times or more the height h of the cell stack 11 in which the plurality of unit cells 100 are stacked. In addition, in each unit cell 100, the length d of the separator 130 protruding outward than the cell stack 11 beyond the second electrode 120 is 1.88 times or less the height h of the cell stack 11.

That is, in each unit cell 100, the length d of the separator 130 protruding outward than the cell stack 11 beyond the second electrode 120 is 1.25 times to 1.88 times the height h of the cell stack 11, in which the plurality of unit cells 100 are stacked.

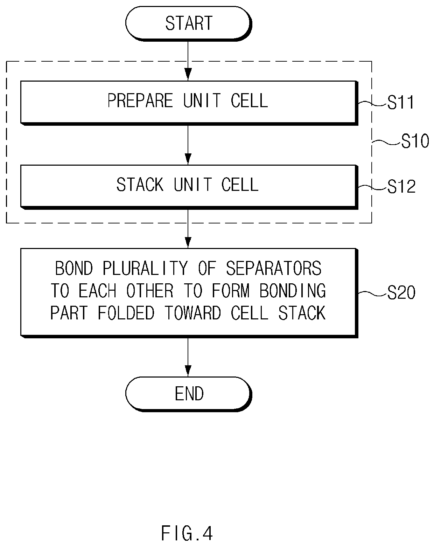

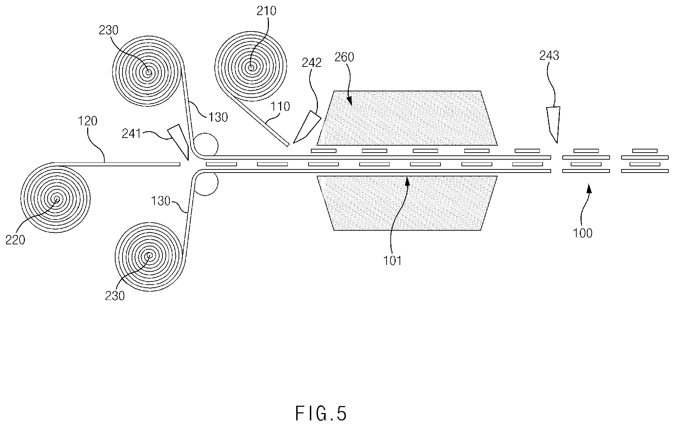

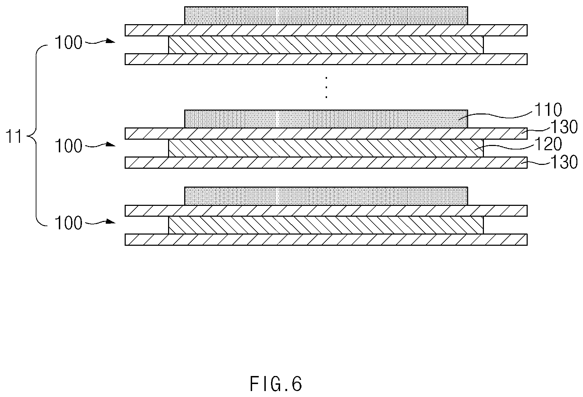

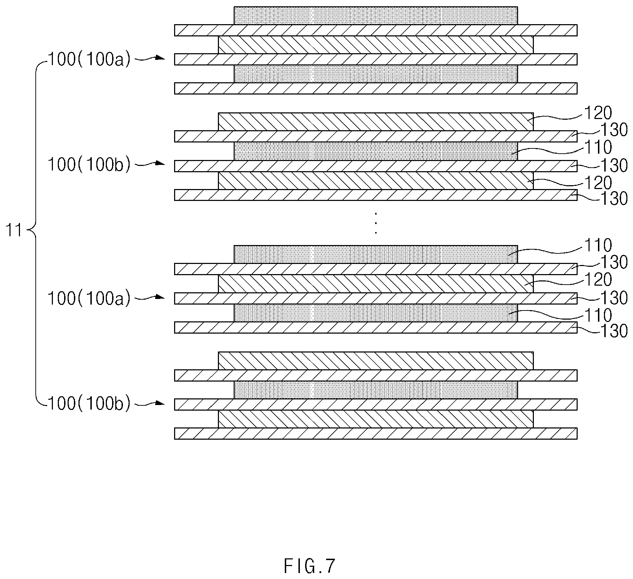

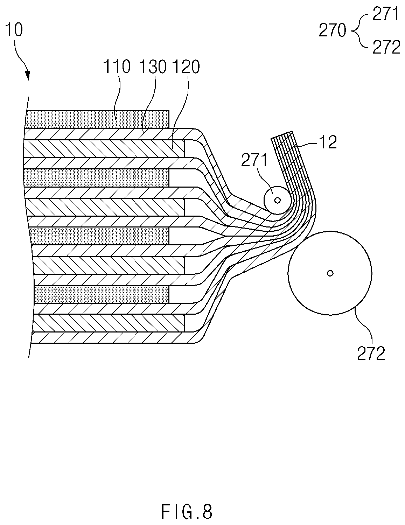

FIG. 4 is a flowchart illustrating a method for manufacturing an electrode assembly according to another embodiment of the present invention, FIG. 5 is a schematic view illustrating an apparatus for manufacturing a unit cell, FIGS. 6 and 7 are views illustrating an example of a stacked structure of a cell stack, and FIG. 8 is a schematic view illustrating an example of a method for manufacturing a bonding part.

Hereinafter, a method for manufacturing an electrode assembly 10 described above will be described as another embodiment of the present invention.

The method for manufacturing the electrode assembly (hereinafter, referred to as 'manufacturing method') according to another embodiment of the present invention includes a process (S10) of preparing a cell stack 11 and a process (S20) forming a bonding part 12.

The process (S10) of preparing the cell stack 11 may include a process (S11) of preparing unit cells 100 and a process (S12) of stacking the unit cells 100.

Hereinafter, the process (S11) of preparing the unit cells 100 will be described with reference to FIG. 5.

A separator unwinder 230 may unwind a separator roll mounted thereon to unwind a sheet-shaped separator 1.

The separator unwinder 230 may be provided in a pair, and the sheet-shaped separators 1 unwound from the pair of separator unwinders 230 may be aligned side by side to face each other.

The electrode unwinders 210 and 220 may unwind the electrode roll mounted thereon to unwind the sheet-shaped electrodes 110 and 120.

The electrode unwinder 230 may be provided in a pair. The sheet-shaped first electrode 110 unwound from one electrode unwinder 210 may be cut into the first electrode 110 having a predetermined width by a cutter 242 and may be disposed at regular intervals on one sheet-shaped separator 130. The sheet-shaped second electrode 120 unwound from the other electrode unwinder 220 may be cut into the second electrode 120 having a predetermined width by a cutter 241 and may be disposed at regular intervals on the other sheet-shaped separator 130. In this process, the second electrode 120 may be cut to be longer than the first electrode 110.

For example, the second electrode 120 may be disposed at regular intervals between the pair of sheet-shaped separators 130, and the first electrode 110 may be disposed at regular intervals on the upper separator 130 of the pair of sheet-shaped separators 130. However, it is not limited thereto, and it is also possible that the first electrode 110 and the second electrode 120 are disposed oppositely.

In addition, unlike illustrated in FIG. 5, the electrodes 110 and 120, each of which has a predetermined width, may be already manufactured in the previous process, and the previously manufactured electrodes 110 and 120 may be disposed on the separator 130 by a transfer device (not shown) such as a pick and place device.

As a result, the electrode stack 101, in which the sheet-shaped separator 130 and the electrodes 110 and 120 having the predetermined width are alternately stacked, may be formed.

The electrode stack 101 may be laminated by a lamination device 260. That is, the lamination device 260 may laminate the separator 130 and the electrodes 110 and 120 of the electrode stack 101 to each other.

For example, the lamination device 260 may include a heater that heats the electrode stack 101 and a pressing roller (not shown) that presses the electrode stack 101. However, the configuration of the lamination device 260 is not limited thereto and may vary as necessary.

The laminated electrode stack 101 may be cut into the unit cells 100 by the cutter 243. In more detail, the sheet-shaped separator 130 of the laminated electrode stack 101 may be cut into the separator 130 having a predetermined width by the cutter 243. In this process, the separator 130 may be cut to be longer than the second electrode 120. A length at which the separator 130 protrudes outward than the second electrode 120 in the unit cell 100 may be 0.7 times or more and 2.4 times or less the height of the cell stack 11 to be manufactured later. Preferably, a length at which the separator 130 protrudes outward than the second electrode 120 in the unit cell 100 is 1.25 times or more and 1.88 times or less the height of the cell stack 11 to be manufactured later.

Thus, the unit cell 100 may be prepared. However, this is only an exemplary method, and it is possible for the unit cell 100 to be prepared by other methods.

Hereinafter, the process (S12) of stacking the unit cells 100 will be described with reference to FIGS. 6 and 7.

When the process (S12) of stacking the unit cells 100 is performed, the plurality of unit cells 100 may be stacked. In more detail, as illustrated in FIG. 6, one type of unit cell 100 may be stacked repeatedly, or as illustrated in FIG. 7, two or more types of unit cells 100a and 100b may be stacked in a given order.

As illustrated in FIG. 6, when the one type of unit cell 100 is repeatedly stacked, the unit cell 100 may have a four-layer structure in which the electrodes 110 and 120 and the separators 130 are alternately stacked. For example, the unit cell 100 may have a four-layer structure in which a separator 130, a second electrode 120, a separator 130, and a first electrode 110 are sequentially stacked.

As illustrated in FIG. 7, when the two or more types of unit cells 100a and 100b are stacked in the given order, if the two or more types of unit cells 100a and 100b are stacked in the given order, a four-layer structure in which the electrodes 110 and 120 and the separator 130 are alternately stacked, or a structure in which the four-layer structure is repeatedly disposed may be formed.

For example, the first type of unit cell 100a may have a six-layer structure in which a separator 130, a first electrode 110, a separator 130, a second electrode 120, a separator 130, and a first electrode 110 are sequentially stacked, and the second type of unit cells 100b may have a six-layer structure in which a separator 130, a second electrode 120, a separator 130, a first electrode 110, a separator 130, and a second electrode 120 are sequentially stacked. Therefore, when the first type of unit cell 100a and the second type of unit cells 100b are stacked one by one, the structure in which the four-layer structure is repeatedly arranged three times may be formed.

Thus, the plurality of unit cells 100 may be stacked to manufacture the cell stack 11 in which the first electrode 110 and the second electrode 120 are alternately stacked with the separator 130 therebetween.

When forming the cell stack 11 using only the unit cells 100, the electrodes 110 and 120 may be disposed on the one outermost side of the cell stack 11, and the separator 130 may be disposed at the other outermost side. However, it is not limited thereto, and the separator 130 may be disposed, or the electrodes 110 and 120 may be disposed at both the outermost sides of the cell stack 11 by additionally stacking sub-unit cells (not shown) on the plurality of unit cells 100. Since this is a well-known technique, a detailed description thereof will be omitted.

Hereinafter, the process (S20) of forming the bonding part 12 will be described with reference to FIG. 8.

As an example of the method for forming the bonding part 12, a pair of rolls 270 may be used as illustrated in FIG. 8.

Each of the rolls 270 may rotate around a rotation axis parallel to a full-length direction of the cell stack 11. Each of the rolls 270 may be a single roll that is formed to be long in the full-length direction of the cell stack 11. However, it is not limited thereto, and each of the rolls 270 may include a plurality of sub-heating rolls disposed at predetermined intervals in the full-length direction of the cell stack 11. In this case, a plurality of bonding parts 12 may be formed at predetermined intervals in the full-length direction of the cell stack 11.

In the process (S20) of forming the bonding part 12, the plurality of separators 130 may be bonded to each other while passing between the pair of rolls 270 of which at least one is heated.

In more detail, edges of the plurality of separators 130 protruding outward in the width direction than the negative electrode 160 may pass between the pair of rolls 270 and be bonded to each other. At least one of the pair of rolls 270 may press the plurality of separators 130 while being heated to a temperature that is sufficiently higher than room temperature. As a result, the edges of the plurality of separators 130 may be bonded by hot forming to form the bonding part 12.

In this process, it is obvious that a fixing jig (not shown) configured to gather the edges of the plurality of separators 130 protruding outward than the negative electrode 160 is used.

The pair of rolls 270 may include a first roll 271 and a second roll 282. A diameter of the first roll 271 may be less than that of the second roll 272. Thus, the plurality of separators 130 may be rolled toward the first roll 271 while being bonded to each other. That is, while the bonding part 12 is formed, the bonding part 12 may be folded toward the cell stack 11.

In order to easily fold the folding part 12, a rotation speed of each of the rolls 271 and 272 and a movement path of a rotation axis of each of the rolls 271 and 272 may be appropriately set. For example, the second roll 272 may rotate and move along an outer circumference of the first roll 271. Thus, there is an advantage that a separate process for folding the bonding part 12 is unnecessary.

In addition, the first roll 271 and the second roll 272 may rotate and move toward the cell stack 11. Thus, an inner end of the bonding part 12 may be formed as close to the cell stack 11 as possible. The inner end of the bonding part 12 may represent a boundary between the second area 132 (see FIG. 2) and the third area 133 of the separator 130. As a result, an increase in width of the electrode assembly 10 caused by the third area 133 of the separator 132 may be minimized, and energy density of the electrode assembly 10 may be improved.

If the folded bonding part 12 protrudes outward than the cell stack 11 in the stacking direction of the cell stack 11, it may be possible to cut a portion of an end side of the bonding part 12.

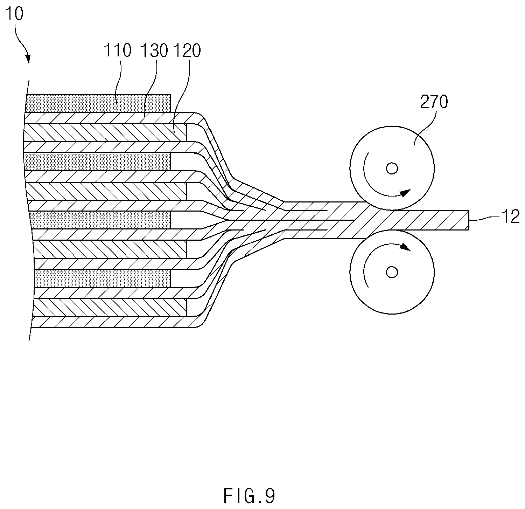

FIG. 9 is a schematic view illustrating another example of the method for manufacturing a bonding part.

As another example of the method for forming the bonding part 12, a pair of rolls 270 having the same or similar diameters may be used as illustrated in FIG. 9.

The plurality of separators 130, and more specifically, edges of the plurality of separators 130 protruding outward in the width direction than the negative electrode 160 may pass between the pair of rolls 270 and be bonded to each other.

In more detail, the pair of rolls 270 may move toward the cell stack 11 with the edges of the gathered separators 130 therebetween. Here, it is obvious that the fixing jig (not shown) configured to gather the edges of the plurality of separators 130 protruding outward than the negative electrode 160 is used.

Each of the rolls 270 may rotate around a rotation axis parallel to a full-length direction of the cell stack 11. Each roll 270 may rotate and move in the full-width direction of the cell stack 11.

As described above, the pair of rolls 270 may move toward the cell stack 11 to bond the plurality of separators 130 to each other, and thus, the inner end of the bonding part 12 may be formed as close to the cell stack 11 as possible. As a result, an increase in width of the electrode assembly 10 caused by the third area 133 of the separator 132 may be minimized, and energy density of the electrode assembly 10 may be improved. Thereafter, the process of folding the bonding part 12 toward the cell stack 11 may be additionally performed.

Therefore, the scope of the present invention is defined by the appended claims.

### [Description of the Symbols]

10: Electrode assembly 11: Cell stack
12: Bonding part 100: Unit cell
110: First electrode 120: Second electrode
130: Separator 131: First area
132: Second area 133: Third area
270: Roll 271: First roll
272: Second roll

## Claims

1. A method for manufacturing an electrode assembly (10), the method comprising:
preparing a cell stack (11), in which a first electrode (110) and a second electrode (120) having a width greater than that of the first electrode (110) are alternately stacked with a separator (130) therebetween;
forming a bonding part (12) that is folded toward the cell stack (11) by bonding the plurality of separators (130) protruding outward than the first electrode (110) and the second electrode (120) to each other;
wherein a proximal end of the bonding part (12) corresponds to a central portion in the stacking direction of the cell stack (11).

2. The method of claim 1, wherein, in the forming of the bonding part (12), the plurality of separators (130) pass between a first roll (271) and a second roll (272), of which at least one is heated, and are bonded to each other.

3. The method of claim 2, wherein the first roll (271) has a diameter less than that of the second roll (272), and
the plurality of separators (130) are bonded to each other to be rolled toward the first roll (271).

4. The method of claim 1, wherein the preparing of the cell stack (11) comprises:
preparing unit cells (100) in which the sum of the number of first electrodes (110) and the number of second electrodes (120) are the same as the number of separators (130); and
stacking the unit cells (100);
**characterized in that** in each of the unit cells (100), a length at which the separator (130) protrudes outward than the second electrode (120) is 1.25 times or more a height of the cell stack (11).

5. The method of claim 4, wherein, in the unit cell (11), a length at which the separator (130) protrudes outward than the second electrode (120) is 1.88 times or less the height of the cell stack (11).

6. The method of claim 1, wherein, in the stacking of the unit cells (100),
one type of unit cell (100) is repeatedly stacked, or
two types of unit cells (100) are stacked in a predetermined order.

7. The method of claim 1, wherein the bonding part (12) is disposed at each of both sides of the cell stack (11) in a width direction to extend in a full-length direction of the cell stack (11).

8. An electrode assembly (10) comprising:
a cell stack (11), in which a first electrode (110) and a second electrode (120) having a width greater than that of the first electrode (110) are alternately stacked with a separator (130) therebetween; and
a bonding part (12) that is folded toward the cell stack (11) by bonding the plurality of separators (130) protruding outward than the first electrode (110) and the second electrode (120) to each other,
wherein a proximal end of the bonding part (12) corresponds to a central portion in the stacking direction of the cell stack (11).

9. The electrode assembly (10) of claim 8, wherein a length at which the outermost separator (130) of the plurality of separators (130) protrudes outward than the second electrode (120) is 1.25 times or more the height of the cell stack (11).

10. The electrode assembly (10) of claim 8, wherein a length at which the outermost separator (130) protrudes outward than the second electrode (120) is 1.88 times or less the height of the cell stack (11).

11. The electrode assembly (10) of claim 8, wherein the bonding part (12) is disposed at each of both sides of the cell stack (11) in a width direction to extend in a full-length direction of the cell stack (11).

12. The electrode assembly (10) of claim 8, wherein the bonding part (12) does not protrude outward than the cell stack (11) in the stacking direction of the cell stack (11).

13. The electrode assembly (10) of claim 8, wherein the separator (130) comprises:
a first area (131) that overlaps the first electrode (110) or the second electrode (120) in the stacking direction of the cell stack (11);
a second area (132) configured to constitutes the bonding part (12); and
a third area (133) configured to connect the first area (131) to the second area (132),
wherein an inclination of the third area (133) is steeper at the separator (130) disposed at each of both outer sides.

## Patentansprüche

1. Verfahren zur Herstellung einer Elektrodenanordnung (10), wobei das Verfahren umfasst:
Vorbereiten eines Zellstapels (11), in dem eine erste Elektrode (110) und eine zweite Elektrode (120) mit einer größeren Breite als die der ersten Elektrode (110) abwechselnd mit einem Separator (130) dazwischen gestapelt sind;
Bilden eines Verbindungsteils (12), das zum Zellstapel (11) hin gefaltet ist, durch Verbinden der Vielzahl von Separatoren (130), die über die erste Elektrode (110) und die zweite Elektrode (120) nach außen vorstehen, miteinander;
wobei ein proximales Ende des Verbindungsteils (12) einem zentralen Abschnitt in der Stapelrichtung des Zellstapels (11) entspricht.

2. Verfahren nach Anspruch 1, wobei bei der Bildung des Verbindungsteils (12) die Vielzahl von Separatoren (130) zwischen einer ersten Walze (271) und einer zweiten Walze (272), von denen mindestens eine beheizt ist, hindurchlaufen und miteinander verbunden werden.

3. Verfahren nach Anspruch 2, wobei die erste Walze (271) einen geringeren Durchmesser als die zweite Walze (272) aufweist, und die Vielzahl von Separatoren (130) miteinander verbunden werden, um in Richtung der ersten Walze (271) gerollt zu werden.

4. Verfahren nach Anspruch 1, wobei das Vorbereiten des Zellstapels (11) umfasst:
Vorbereiten von Einheitszellen (100), in denen die Summe der Anzahl der ersten Elektroden (110) und der Anzahl der zweiten Elektroden (120) gleich der Anzahl der Separatoren (130) ist; und
Stapeln der Einheitszellen (100);
**dadurch gekennzeichnet, dass** in jeder der Einheitszellen (100) eine Länge, über die der Separator (130) über die zweite Elektrode (120) nach außen vorsteht, das 1,25-fache oder mehr einer Höhe des Zellstapels (11) beträgt.

5. Verfahren nach Anspruch 4, wobei in der Einheitszelle (11) eine Länge, über die der Separator (130) über die zweite Elektrode (120) nach außen vorsteht, das 1,88-fache oder weniger der Höhe des Zellstapels (11) beträgt.

6. Verfahren nach Anspruch 1, wobei beim Stapeln der Einheitszellen (100),
ein Typ von Einheitszelle (100) wiederholt gestapelt wird, oder
zwei Typen von Einheitszellen (100) in einer vorbestimmten Reihenfolge gestapelt werden.

7. Verfahren nach Anspruch 1, wobei das Verbindungsteil (12) an jeder der beiden Seiten des Zellstapels (11) in einer Breitenrichtung angeordnet ist, um sich in einer Längsrichtung des Zellstapels (11) zu erstrecken.

8. Elektrodenanordnung (10), umfassend:
einen Zellstapel (11), in dem eine erste Elektrode (110) und eine zweite Elektrode (120) mit einer größeren Breite als die der ersten Elektrode (110) abwechselnd mit einem Separator (130) dazwischen gestapelt sind; und
ein Verbindungsteil (12), das zum Zellstapel (11) hin gefaltet ist, durch Verbinden der Vielzahl von Separatoren (130), die über die erste Elektrode (110) und die zweite Elektrode (120) nach außen vorstehen, miteinander,
wobei ein proximales Ende des Verbindungsteils (12) einem zentralen Abschnitt in der Stapelrichtung des Zellstapels (11) entspricht.

9. Elektrodenanordnung (10) nach Anspruch 8, wobei eine Länge, über die der äußerste Separator (130) der Vielzahl von Separatoren (130) über die zweite Elektrode (120) nach außen vorsteht, das 1,25-fache oder mehr der Höhe des Zellstapels (11) beträgt.

10. Elektrodenanordnung (10) nach Anspruch 8, wobei eine Länge, über die der äußerste Separator (130) über die zweite Elektrode (120) nach außen vorsteht, das 1,88-fache oder weniger der Höhe des Zellstapels (11) beträgt.

11. Elektrodenanordnung (10) nach Anspruch 8, wobei das Verbindungsteil (12) an jeder der beiden Seiten des Zellstapels (11) in einer Breitenrichtung angeordnet ist, um sich in einer Längsrichtung des Zellstapels (11) zu erstrecken.

12. Elektrodenanordnung (10) nach Anspruch 8, wobei das Verbindungsteil (12) nicht über den Zellstapel (11) in der Stapelrichtung des Zellstapels (11) nach außen vorsteht.

13. Elektrodenanordnung (10) nach Anspruch 8, wobei der Separator (130) umfasst:
einen ersten Bereich (131), der die erste Elektrode (110) oder die zweite Elektrode (120) in der Stapelrichtung des Zellstapels (11) überlappt;
einen zweiten Bereich (132), der so konfiguriert ist, dass er das Verbindungsteil (12) bildet; und
einen dritten Bereich (133), der so konfiguriert ist, dass er den ersten Bereich (131) mit dem zweiten Bereich (132) verbindet,
wobei eine Neigung des dritten Bereichs (133) an dem Separator (130), der an jeder der beiden Außenseiten angeordnet ist, steiler ist.

## Revendications

1. Procédé de fabrication d'un ensemble d'électrodes (10), le procédé comprenant :
la préparation d'un empilement de cellules (11), dans lequel une première électrode (110) et une seconde électrode (120) ayant une largeur supérieure à celle de la première électrode (110) sont empilées en alternance avec un séparateur (130) entre elles ;
la formation d'une partie de liaison (12) qui est repliée vers l'empilement de cellules (11) en liant la pluralité de séparateurs (130) faisant saillie vers l'extérieur par rapport à la première électrode (110) et à la seconde électrode (120) les uns aux autres ;
dans lequel une extrémité proximale de la partie de liaison (12) correspond à une partie centrale dans la direction d'empilement de l'empilement de cellules (11).

2. Procédé selon la revendication 1, dans lequel, lors de la formation de la partie de liaison (12), la pluralité de séparateurs (130) passe entre un premier rouleau (271) et un second rouleau (272), dont au moins un est chauffé, et sont liés les uns aux autres.

3. Procédé selon la revendication 2, dans lequel le premier rouleau (271) a un diamètre inférieur à celui du second rouleau (272), et la pluralité de séparateurs (130) sont liés les uns aux autres pour être enroulés vers le premier rouleau (271).

4. Procédé selon la revendication 1, dans lequel la préparation de l'empilement de cellules (11) comprend :
la préparation de cellules unitaires (100) dans lesquelles la somme du nombre de premières électrodes (110) et du nombre de secondes électrodes (120) est égale au nombre de séparateurs (130) ; et
l'empilement des cellules unitaires (100) ;
**caractérisé en ce que** dans chacune des cellules unitaires (100), une longueur sur laquelle le séparateur (130) fait saillie vers l'extérieur par rapport à la seconde électrode (120) est égale à 1,25 fois ou plus une hauteur de l'empilement de cellules (11).

5. Procédé selon la revendication 4, dans lequel, dans la cellule unitaire (11), une longueur sur laquelle le séparateur (130) fait saillie vers l'extérieur par rapport à la seconde électrode (120) est égale à 1,88 fois ou moins la hauteur de l'empilement de cellules (11).

6. Procédé selon la revendication 1, dans lequel, lors de l'empilement des cellules unitaires (100),
un type de cellule unitaire (100) est empilé de manière répétée, ou
deux types de cellules unitaires (100) sont empilés dans un ordre prédéterminé.

7. Procédé selon la revendication 1, dans lequel la partie de liaison (12) est disposée de chaque côté de l'empilement de cellules (11) dans une direction de la largeur et s'étend sur toute la longueur de l'empilement de cellules (11).

8. Ensemble d'électrodes (10) comprenant :
un empilement de cellules (11), dans lequel une première électrode (110) et une seconde électrode (120) ayant une largeur supérieure à celle de la première électrode (110) sont empilées en alternance avec un séparateur (130) entre elles ; et
une partie de liaison (12) qui est repliée vers l'empilement de cellules (11) en liant la pluralité de séparateurs (130) faisant saillie vers l'extérieur par rapport à la première électrode (110) et à la seconde électrode (120) les uns aux autres,
dans lequel une extrémité proximale de la partie de liaison (12) correspond à une partie centrale dans la direction d'empilement de l'empilement de cellules (11).

9. Ensemble d'électrodes (10) selon la revendication 8, dans lequel une longueur sur laquelle le séparateur le plus externe (130) de la pluralité de séparateurs (130) fait saillie vers l'extérieur par rapport à la seconde électrode (120) est égale à 1,25 fois ou plus la hauteur de l'empilement de cellules (11).

10. Ensemble d'électrodes (10) selon la revendication 8, dans lequel une longueur sur laquelle le séparateur le plus externe (130) fait saillie vers l'extérieur par rapport à la seconde électrode (120) est égale à 1,88 fois ou moins la hauteur de l'empilement de cellules (11).

11. Ensemble d'électrodes (10) selon la revendication 8, dans lequel la partie de liaison (12) est disposée de chaque côté de l'empilement de cellules (11) dans une direction de la largeur et s'étend sur toute la longueur de l'empilement de cellules (11).

12. Ensemble d'électrodes (10) selon la revendication 8, dans lequel la partie de liaison (12) ne fait pas saillie vers l'extérieur par rapport à l'empilement de cellules (11) dans la direction d'empilement de l'empilement de cellules (11).

13. Ensemble d'électrodes (10) selon la revendication 8, dans lequel le séparateur (130) comprend :
une première zone (131) qui chevauche la première électrode (110) ou la seconde électrode (120) dans la direction d'empilement de l'empilement de cellules (11) ;
une seconde zone (132) configurée pour constituer la partie de liaison (12) ; et
une troisième zone (133) configurée pour relier la première zone (131) à la seconde zone (132),
dans lequel une inclinaison de la troisième zone (133) est plus prononcée au niveau du séparateur (130) disposé de chaque côté extérieur.
